# EUROPÄISCHE PATENTANMELDUNG

(11) **EP 1 829 774 A1**
(43) Veröffentlichungstag der Anmeldung: **05.09.2007**
(21) Anmeldenummer: 06026857.0
(22) Anmeldetag: 23.12.2006
(51) Int. Cl.: B62H 1/06

(54) **Fahrradständer zum Selbststand des Fahrrades mit selbstfixierender Länge**

(30) Priorität: 05.01.2006 DE 102006001105
(71) Anmelder: Scheding, Lothar, 79423 Heitersheim (DE)
(72) Erfinder: Scheding, Lothar, 79423 Heitersheim (DE)

(57) **Zusammenfassung**

Es handelt sich um einen am Fahrrad anzubringenden Fahrradständer, der durch ein in einem Aussenrohr (2) gleitendem Innenrohr (1) eine flexible Länge erhält. Beim Abstellen des zunächst vom Benutzer aufrecht gehaltenen Fahrrades wird das innere Rohr (1) durch eine Feder (3) aus dem Aussenrohr (2) herausgedrückt und kommt so in seiner maximalen Länge mit dem Boden in Kontakt. Das Fahrrad wird nun vom Benutzer in Richtung des Ständers geneigt, wobei das Innenrohr (1) entgegen der Federkraft in das Aussenrohr (2) geschoben wird. Beim Erreichen einer konstruktiv vorgegebenen Neigung kommt eine formschlüssige Sperrvorrichtung, bestehend aus Kerben (7) am Innenrohr (1) und einer beweglichen Kugel (5), in Eingriff, die ein weiteres Einschieben des Innenrohres (1) in das Aussenrohr (2) verhindert, so dass das Fahrrad abgestützt ist.

## Beschreibung

Fahrradständer, die am Fahrrad selbst angebracht sind (auch Fahrradseitenständer genannt), dienen dem Fahrrad als Stütze, um ein Umfallen im freien Stand zu verhindern. Die Länge des Fahrradständers wird dem jeweiligen Rad einmalig angepasst. Damit ist ein Abstellen des Rades auf ebenem Untergrund möglich.
Soll das Rad jedoch am Hang oder auf unebenem Untergrund abgestellt werden, ist die vorgegebene Länge des Ständers der Situation nicht mehr angepasst und der stabile Stand des Rades nicht mehr gewährleistet.
Ein unbeabsichtigtes Umstürzen des Rades mit Beschädigungen ist häufig die Folge.

Die im Patentanspruch beschriebene Erfindung löst dieses Problem.
Der Vorteile der Erfindung liegen darin, dass der Ständer in seiner Länge flexibel ist und sich selbsttätig in seiner Länge den Gegebenheiten des Untergrundes anpasst.
Nach dem Ausklappen des Ständers wird das Fahrrad in Richtung gegen den Ständer geneigt, bis der optimale Neigungswinkel erreicht ist. In dieser Stellung blockiert der Auszugsmechanismus selbsttätig, so dass das Rad auf jedem Untergrund seine beste Standsituation erzielt. Ein Justieren oder Voreinstellen ist nicht notwendig, da der Mechanismus selbsttätig arbeitet.

Die folgenden **Zeichnungen und Beschreibungen** stellen ein Ausführungsbeispiel der Erfindung dar.

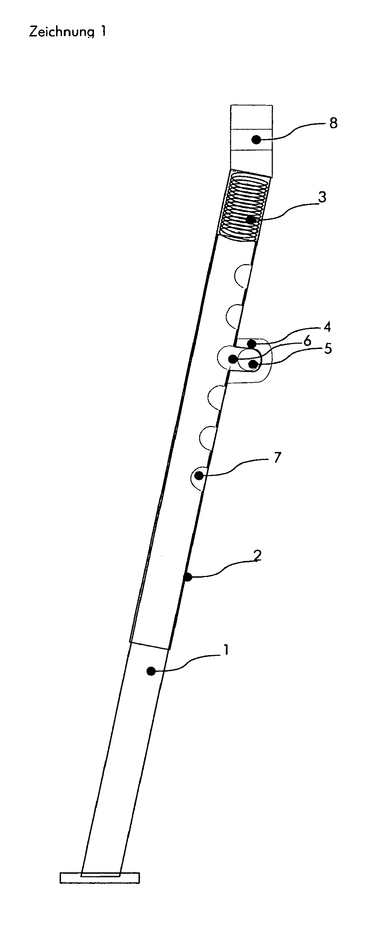

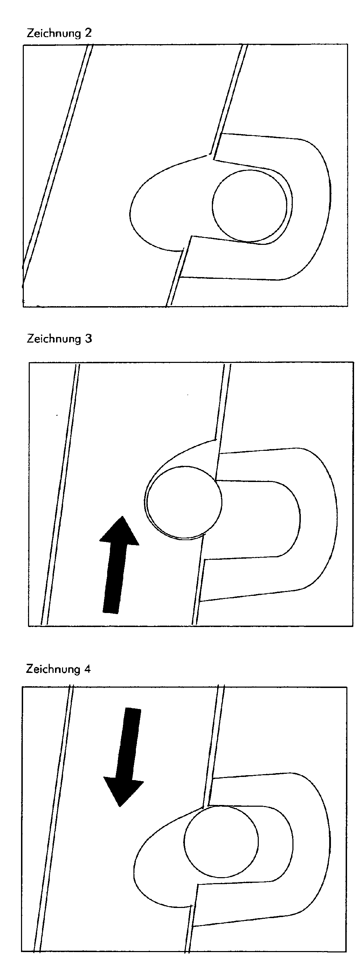

Zeichnung 1 zeigt im Schnitt ein Innenrohr (1), das in ein Außenrohr (2) eingeschoben ist und darin flexibel gleiten kann. Mittels einer Druckfeder (3) wird das Innenrohr auf maximale Weite herausgeschoben. Auf dem Außenrohr aufgesetzt ist ein Kugelkanal (4), in dem eine frei bewegliche Kugel (5) gelagert ist. Diese Kugel rollt aus dem Kanal, sobald dieser aus der Horizontalen heraus in die Schwerkraftneigung bewegt wird.
Die Kugel rollt nun durch eine Bohrung im Aussenrohr (6) in eine von mehreren im Innenrohr befindlichen Kerbe (7). Sie bleibt in der Kugelpfanne der Kerbe liegen, wobei ein Teil der Kugel ausserhalb der Kerbe verbleibt. Damit verklemmt sie das Innenrohr mit dem Aussenrohr und verhindert so ein weiteres Einschieben.
Der Kugelkanal ist in einem vorgegebenen Winkel angebracht, der bei einer vordefinierten Neigung des Fahrrades die Kugel ausrollen lässt und somit in der Kerbe blockiert, die in dieser Winkelstellung den Kugelkanal, die Bohrung im Aussenrohr und die Kugel passiert und somit ein weiteres Einschieben des Innenrohres in das Aussenrohr verhindert.
Somit erhält, unabhängig vom Untergrund, das Fahrrad seinen optimalen Stand.
Durch Einklappen des Fahrradständers mittels eine Drehgelenkes (8) wird dieser wieder entlastet, so dass die Feder das Innenrohr wieder herausdrücken kann. Dabei wird die Kugel wieder in den Kugelkanal zurückgerollt.
Zeichnungen 2-4 zeigen die Funktion im Detail:
Zeichnung 2: Lagerung der Kugel im Ruhezustand
Zeichnung 3: Lagerung der Kugel in der Kerbe und Blockieren
Zeichnung 4: Zurückrollen der Kugel in den Kugelkanal

## Patentansprüche

1. Hauptanspruch
Bei dem Anmeldegegenstand handelt es sich um eine am Fahrrad anzubringenden Fahrradständer, der durch ein in einem Aussenrohr gleitendem Innenrohr eine flexible Länge erhält. Beim Abstellen des zunächst vom Benutzer aufrecht gehaltenen Fahrrades wird das innere Rohr durch eine Feder aus dem Aussenrohr herausgedrückt und kommt so in seiner maximalen Länge mit dem Boden in Kontakt. Das Fahrrad wird nun vom Benutzer in Richtung des Ständers geneigt, wobei das Innenrohr entgegen der Federkraft in das Aussenrohr geschoben wird. Beim Erreichen einer konstruktiv vorgegebenen Neigung kommt eine formschlüssige Sperrvorrichtung, bestehend aus Kerben am Innenrohr und einer beweglichen Kugel, in Eingriff, die ein weiteres Einschieben des Innenrohres in das Aussenrohr verhindert, so dass das Fahrrad abgestützt ist.

2. Nebenanspruch
Wie Hauptanspruch, jedoch ohne Einsatz einer Druckfeder.
Beim Abstellen des Fahrrades gleitet das Innenrohr durch die Schwerkraft aus dem Aussenrohr und kommt so mit der maximalen Länge mit dem
Boden in Kontakt. Durch das Neigen des Fahrrades in Richtung Ständer wird das Innenrohr in das Aussenrohr eingeschoben. Beim Erreichen einer konstruktiv vorgegebenen Neigung verhindert eine formschlüssige Sperrvorrichtung, bestehend aus Kerben im Innenrohr und einer beweglichen Kugel, ein weiteres Einschieben des Innenrohres in das Aussenrohr, so dass das Fahrrad abgestützt wird.
